# EUROPEAN PATENT SPECIFICATION

(11) **EP 4 572 134 B1**
(45) Date of publication and mention of the grant of the patent: **28.10.2026**
(21) Application number: 24218860.5
(22) Date of filing: 10.12.2024
(51) Int. Cl.: H02S 30/00, F24S 25/636

(54) **FIXING DEVICE FOR PHOTOVOLTAIC PANELS**
BEFESTIGUNGSVORRICHTUNG FÜR FOTOVOLTAISCHE PANEELE
DISPOSITIF DE FIXATION POUR PANNEAUX PHOTOVOLTAÏQUES

(30) Priority: 14.12.2023 IT 202300026625; 21.10.2024 IT 202400023322
(43) Date of publication of application: 18.06.2025
(73) Proprietor: Impianti Elettrici Alpa Di Lorenzato Paride Gino, 36027 Rosà (VI) (IT)
(72) Inventor: CAPPELLO, Renzo, 36056 TEZZE SUL BRENTA VI (IT)
(74) Representative: Modiano, Micaela Nadia

(56) References cited:
- EP-B1- 2 260 211
- EP-B1- 2 520 877
- EP-B1- 3 711 158
- IT-A1- TO20 110 354
- US-A1- 2003 049 094
- US-A1- 2011 214 365
- US-A1- 2012 102 853
- US-B2- 11 078 950

## Description

The present invention relates to a fixing device for photovoltaic panels.

Nowadays the use is increasingly widespread of photovoltaic panels for generating clean and renewable electricity.

For installation technicians, this is resulting in a considerable increase in requests to install panels, requests that must be satisfied with a rapid turnaround.

Usually, photovoltaic panels are anchored, by means of fixing devices, to longitudinal guides which are fixed to the roof.

The longitudinal guides are usually made of aluminum profiles which are substantially C-shaped in cross-section.

Such fixing devices generally comprise:
- an upper bracket, made of aluminum alloy, which has one or two wings with locator tabs for a corresponding number of photovoltaic panels and which is adapted to clamp the photovoltaic panels on the longitudinal guide,
- a screw with a flush hexagonal socket head, which passes through the upper bracket and a lower bracket and is adapted to clamp the two brackets and bring them closer together,
- the lower bracket, provided with a threaded hole for the screw, made of galvanized or stainless steel, which is adapted to be inserted in and anchored inside the longitudinal guide,
- an alignment element, made of plastic material and provided with two flexible elastic latches, which is associated with the lower bracket,
- a coil spring, surrounding the shank of the screw, which is adapted to turn the lower bracket by using the friction effect generated by the load of the spring and by the alignment element which, by virtue of the flexible latches, makes it possible to orient the lower bracket in the position for fixing; this position must have an axis of extension at right angles to the axis of extension of the longitudinal guide.

In the present description, the expressions "upper", "lower", "downwardly", "upwardly", "above", "below", etc. are used with reference to the configuration for use of the device on a roof.

Such conventional techniques have a number of drawbacks.

First of all, during the step of fixing, it is not always possible to successfully orient the lower bracket in the correct position.

The perfect outcome of this operation depends in fact on various factors such as the skill of the installation technician, the temperature of the alignment element (which, being made of plastic, can dilate/deform at certain temperatures), the pre-loading of the spring, etc.

Furthermore, tightening the screw can present numerous uncertainties and difficulties.

In fact, with the increasing use of battery-operated screw guns, the screw is often fixed with:
- an insufficient tightening torque, with the risk of not adequately anchoring the photovoltaic panel,
- an excessive tightening torque, which results in the deformation of the profile of the longitudinal guide and/or of the upper bracket, so making the anchoring of the photovoltaic panel precarious.

This drawback arises especially in installations on roofs, in inconvenient positions and environments.

Furthermore, nowadays, if it is necessary to substitute one of the panels located in the middle of the row of panels anchored to the longitudinal guides, it is necessary to remove all the panels in the row.

US2012/102853A1 discloses devices, systems and methods for mounting solar panels on a pitched roof.

The aim of the present invention is to provide a fixing device for photovoltaic panels that is capable of improving the known art in one or more of the above-mentioned aspects.

Within this aim, an object of the invention is to provide a fixing device for photovoltaic panels that is easier and simpler than similar, conventional devices.

Another object of the invention is to provide a fixing device for photovoltaic panels, the application efficacy of which is independent of factors such as operator skill, temperature, pre-loading of the spring.

A further object of the invention is to provide a fixing device for photovoltaic panels that does not present difficulty in orienting the bracket with respect to the longitudinal guide.

Another object of the invention is to provide a fixing device for photovoltaic panels that, if it becomes necessary to remove/substitute a panel in the middle of the row, does not require the removal of all the panels that precede it along the row.

Furthermore, the present invention sets out to overcome the drawbacks of the background art in a manner that is alternative to any existing solutions.

Another object of the invention is to provide a fixing device for photovoltaic panels that is highly reliable, easy to implement and at low cost.

This aim and these and other objects which will become better apparent hereinafter are achieved by a device for fixing photovoltaic panels, which comprises:
- a first bracket,
- a second bracket, arranged below said first bracket,
- a tension member arranged between said first bracket and said second bracket, for moving said second bracket toward/away from said first bracket,
said device being characterized in that it comprises a cam which is kinematically connected to a first end of said tension member.

Further characteristics and advantages of the invention will become more apparent from the description of some preferred, but not exclusive, embodiments of the fixing device for photovoltaic panels according to the invention, which are illustrated for the purposes of non-limiting example in the accompanying drawings wherein:
- Figure 1 is an overall perspective view of a fixing device for photovoltaic panels, according to the invention, in the working configuration, in a first embodiment;
- Figure 2 is a front elevation view of the fixing device of Figure 1;
- Figure 3 is a cross-sectional view of the fixing device of Figure 1;
- Figure 4 is a view of a component of a fixing device of Figure 1;
- Figure 5 is an overall perspective view of a fixing device for photovoltaic panels, according to the invention, in the working configuration, in a second embodiment;
- Figure 6 is a front elevation view of the device of Figure 5;
- Figure 7 is a cross-sectional view of the fixing device of Figure 5;
- Figure 8 is a schematic perspective view of a use application of the devices of Figures 1 and 5;
- Figure 9 is a simplified perspective view of a use application, of a fixing device for photovoltaic panels, according to the invention, in a third embodiment;
- Figure 10 is a cross-sectional view of the use application of Figure 9;
- Figures 11a and 11b are two different views of the fixing device of Figure 9;
- Figure 12 is an exploded view of the device in Figure 9.

With reference to the figures, a fixing device for photovoltaic panels, according to the invention, in a first embodiment thereof, is generally designated by the reference numeral 10.

The device 10 comprises:
- a first bracket 11,
- a second bracket 12, arranged below the first bracket 11,
- a tension member 13 arranged between the first bracket 11 and the second bracket 12, for moving the second bracket 12 toward/away from the first bracket 11.

One of the peculiarities of the device 10 consists in that it comprises a cam 14 which is kinematically connected to a first end 15 of the tension member 13.

In particular, the tension member 13 comprises a first pin 16, which is at least partially threaded and passes through the first bracket 11, such first pin 16 being:
- connected to the cam 14, at a first end thereof, which coincides with the first end 15 of the tension member 13,
- screwed to the second bracket 12, at a second end thereof 17, which is opposite to the previous one.

The tension member 13 comprises a coil spring 18, which surrounds the first pin 16 and extends between the first bracket 11 and the second bracket 12.

The first pin 16 has, at the first end 15 of the tension member 13, an enlarged head 19, which has a first through hole 20, the axis of extension of which is at right angles to the axis of extension of the first pin 16.

According to the present invention, the cam 14 comprises a body provided with two parallel and mirror-symmetrical plates 21a, 21b, respectively: a first plate 21a and a second plate 21b.

According to the present invention, each plate 21a, 21b has a substantially C-shaped profile provided with a portion 24a, 24b with an at least partially curved profile, from which two first wings 22a, 22b, 22a', 22b' extend.

According to the present invention, the plates 21a, 21b are joined at the free ends of the first wings 22a, 22b, 22a', 22b' by two bridge elements 23a, 23b, each one forming a connection between two corresponding first wings 22a, 22a' or 22b, 22b'.

According to the present invention, the bridge elements 23a, 23b are arranged at right angles to the planes of arrangement of the plates 21a, 21b.

According to the present invention, each plate 21a, 21b has a second through hole 29, proximate to/at the portion 24a, 24b with an at least partially curved profile, corresponding to the first hole 20.

For convenience, in the figures only the second hole 29 of the first plate 21a is indicated, but the second plate 21b has a similar second hole.

The device 10 comprises a second pin 30, which passes through in the following order:
- the second hole 29 of the first plate 21a,
- the first hole 20 of the first pin 16,
- the second hole of the second plate 21b.

According to the present invention, the cam 14 has an opening 25 between the bridge elements 23a, 23b, which is opposite to the portion 24a, 24b with an at least partially curved profile, for inserting the tip of a tool 7 for moving the cam 14.

The first bracket 11 has a longitudinal profile which in transverse cross-section is substantially Ω-shaped, with:
- a core 26,
- two opposite and mirror-symmetrical second wings 27a, 27b, each one extending from the core 26 at right angles to and above the latter,
- a tab 28a, 28b for each one of the second wings 27a, 27b, extending at the free end of the corresponding second wing 27a, 27b, at right angles to it, such tab 28a, 28b extending parallel to the core 26 and in the opposite direction to the latter with respect to the corresponding second wing 27a, 27b.

In the figures, the device 10 is shown in the working configuration, i.e. fixing the photovoltaic panel to the longitudinal guide 1, and the first wings 22a, 22b, 22a', 22b' of the cam 14 are substantially parallel to the core 26.

However, in the inactive configuration, not shown in the figures, the first wings 22a, 22b, 22a', 22b' of the cam 14 are substantially at right angles to the core 26.

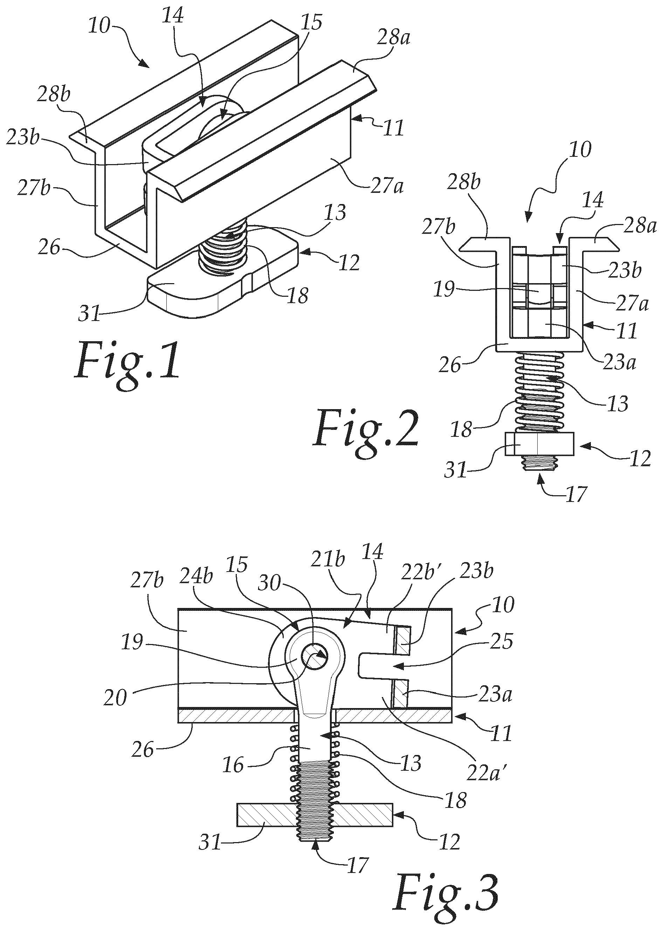

In the embodiment of Figures 1-3, the first bracket 11 is a bracket that can be used at an intermediate region of the photovoltaic plant, and is adapted to lock two successive photovoltaic panels. Such first bracket 11 therefore has two second wings 27a, 27b and two tabs 28a, 28b.

In other embodiments, the first bracket is used at an end region of the photovoltaic plant and is adapted to lock only one photovoltaic panel.

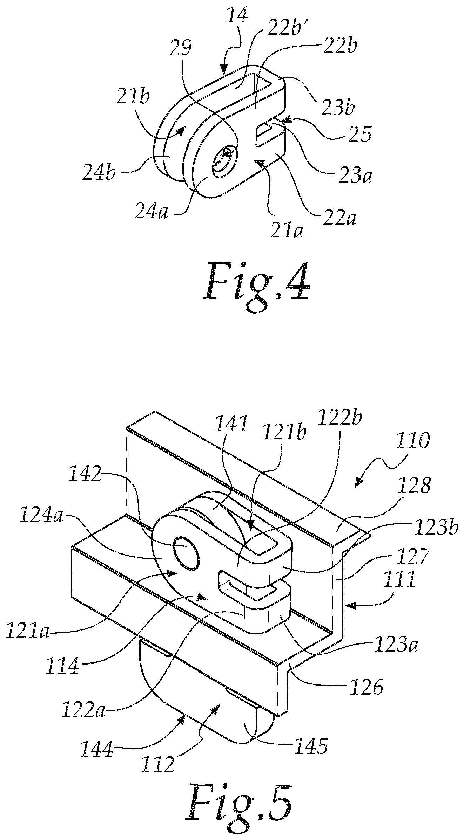

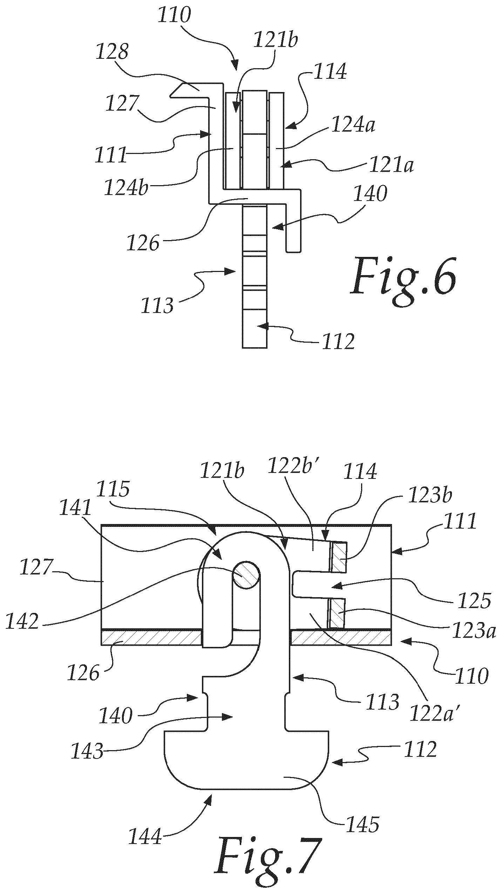

In such case, as illustrated for example in Figures 5 and 6 and explained in more detail below, the first bracket has only one second wing and only one tab.

Advantageously the first pin 16 passes through the core 26 of the first bracket 11, and the device 10 has the enlarged head 19 and the cam 14 above the core 26, with the second pin 30 parallel to the plane of arrangement of the core 26.

The second bracket 12 is constituted by a flat element 31, which is parallel to the core 26 of the first bracket 11 and is screwed centrally to the first pin 16, which is at right angles to the plane of arrangement of the flat element 31.

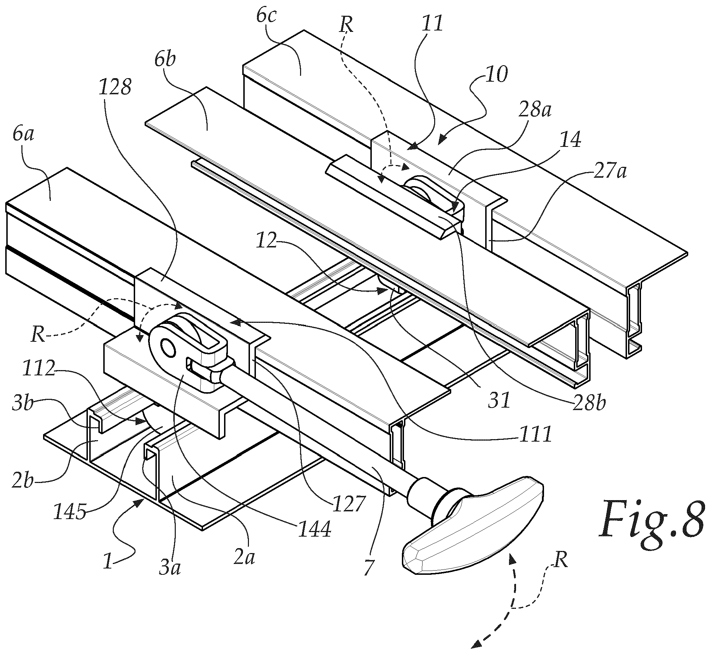

With reference to Figure 8, the extension of the flat element 31 is substantially comparable to the distance between the wings 2a, 2b of a longitudinal guide 1 and is such as to produce an interference with the locators 3a, 3b of the wings 2a, 2b, of the guide 1.

Figures 5 to 7 show a fixing device for photovoltaic panels, according to the invention, in a second embodiment, generally designated by the reference numeral 110.

The components of the device 110 which are similar to the components of the first embodiment described above, and illustrated in Figures 1 to 4, have been indicated with the same reference numerals, increased by 100.

In such second embodiment, the tension member 113 is in a single piece with the second bracket 112 and, with the latter, defines an anchoring element 140.

The anchoring element 140 comprises in the following order:
- a hook-shaped head 141 at a first end 115 thereof, interposed between the plates 121a, 121b of the cam 114 and coupled to it by means of a third pin 142,
- a central portion 143, the width of which is comparable to the width of the hook-shaped head 141,
- a widened portion 145, defined by the second bracket 112, at a second end 144, opposite to the first end 115, the widened portion 145 of which is wider than the width of the central portion 143, as can be seen in Figure 7.

The first bracket 111 has a longitudinal profile with:
- a core 126,
- a second wing 127 extending from the core 126, at right angles to and above the latter,
- a tab 128 extending at the free end of the second wing 127, at right angles to it, such tab extending parallel to the core 126 and in the opposite direction to the latter with respect to the second wing 127.

In particular, the bracket 111 is used at an end region of the photovoltaic plant and is adapted to lock only one photovoltaic panel.

In other embodiments, the device is used in a central region of the photovoltaic plant and in such case the first bracket has an Ω-shaped cross-section, similar to that described above for the first embodiment and illustrated in Figures 1 to 4.

Advantageously the anchoring element 140 passes through the core 126 of the first bracket 111, and the device 110 has the hook-shaped head 141 and the cam 114 above the core 126, with the third pin 142 parallel to the plane of arrangement of the core 126.

With reference to Figure 8, the extension of the widened portion 145 is substantially comparable to the distance between the wings 2a, 2b of a longitudinal guide 1 and is such as to produce an interference with the locators 3a, 3b of the wings 2a, 2b, of the guide 1.

The use of the device 10, 110 according to the invention is the following and is shown schematically in Figure 8.

The device 10, 110 is positioned on the longitudinal guide 1 by placing the second bracket 12, 112 between the wings 2a, 2b, of the guide 1, below the locators 3a, 3b, and keeping the first bracket 11, 111 above these.

Then, the device 10, 110 is brought close to corresponding perimeter profiles 6a, 6b, 6c of photovoltaic panels (not shown in the figures), placing the respective tabs 28a, 28b, 128 above such perimeter profiles 6a, 6b, 6c, and the corresponding second wings 27a, 27b, 127 in contact with them.

At this point the technician inserts the tip of a tool 7 (for example a screwdriver) into the opening 25, 125 of the cam 14, 114, and makes the latter turn about the pin 30, 142, in the direction indicated by the arrow R, in order to bring it to the working configuration, shown in the figures.

The rotation of the cam 14, 114 causes the lifting of the tension member 13, 113, and a consequent tightening/fixing of the perimeter profiles 6a, 6b, 6c on the guide 1.

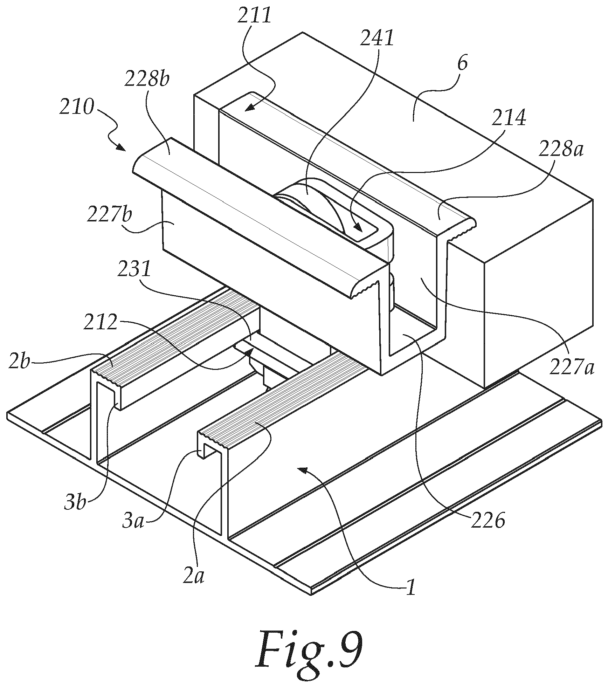

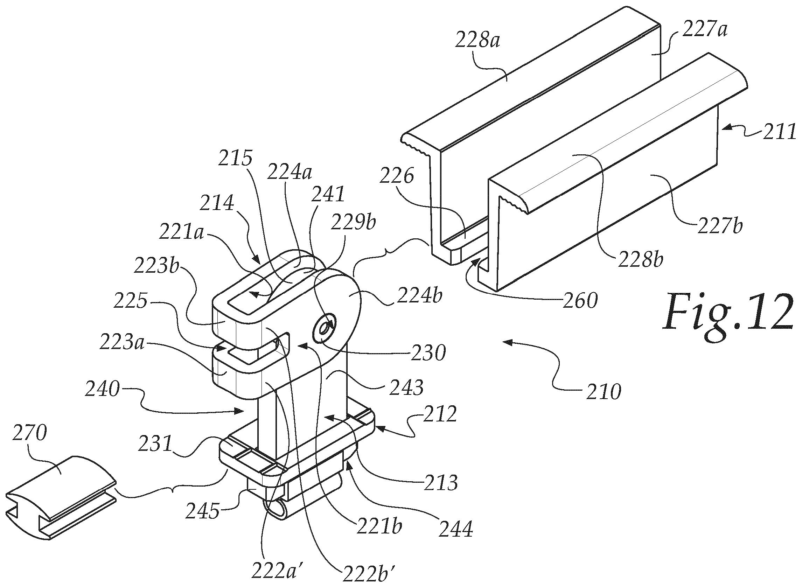

With reference to Figures 9-12, a fixing device for photovoltaic panels, according to the invention, is generally designated by the reference numeral 210.

The device 210 is used for fixing a perimeter profile 6 of a photovoltaic panel, not shown in the figures, to a longitudinal guide 1.

The device 210 comprises:
- a first bracket 211,
- a second bracket 212, arranged below the first bracket 211,
- a tension member 213 arranged between the first bracket 211 and the second bracket 212, for moving the second bracket 212 toward/away from the first bracket 211.

One of the peculiarities of the device 210 consists in that it comprises a cam 214 which is kinematically connected to a first end 215 of the tension member 213.

The cam 214 comprises a body provided with two parallel and mirror-symmetrical plates 221a, 221b, respectively: a first plate 221a and a second plate 221b.

Each plate 221a, 221b has a substantially C-shaped profile provided with a portion 224a, 224b with an at least partially curved profile, from which two first wings 222a, 222b, 222a', 222b' extend.

The plates 221a, 221b are joined at the free ends of the first wings 222a, 222b, 222a', 222b' by two bridge elements 223a, 223b, each one forming a connection between two corresponding first wings 222a, 222a' or 222b, 222b'.

The bridge elements 223a, 223b are arranged at right angles to the planes of arrangement of the plates 221a, 221b.

Each plate 221a, 221b has a first through hole 229a, 229b, proximate to/at the portion 224a, 224b with an at least partially curved profile, corresponding to a through hole, not shown in the figures, in the first end 215 of the tension member 213.

The device 210 comprises a pin 230, which passes through in the following order:
- the first hole 229a of the first plate 221a,
- the hole in the first end 215 of the tension member 213,
- the first hole 229b of the second plate 221b.

The cam 214 has an opening 225 between the bridge elements 223a, 223b, which is opposite to the portion 224a, 224b with an at least partially curved profile, for inserting the tip of a tool, not shown in the figures, for moving the cam 214.

The first bracket 211 has a longitudinal profile which in transverse cross-section is substantially Ω-shaped, with:
- a core 226,
- two opposite and mirror-symmetrical second wings 227a, 227b, each one extending from the core 226 at right angles to and above the latter,
- a tab 228a, 228b for each one of the second wings 227a, 227b, extending at the free end of the corresponding second wing 227a, 227b, at right angles to it, such tab 228a, 228b extending parallel to the core 226 and in the opposite direction to the latter with respect to the corresponding second wing 227a, 227b.

One of the peculiarities of the invention consists in that the core 226 of the first bracket 211 has a longitudinal opening 260, extending starting from a longitudinal first end of the core 226 of the first bracket 211.

This longitudinal opening 260 is adapted to allow the insertion/removal of the first bracket 211 into/out of the tension member 213 if needed, speeding up any operations on the panels in the center of the row, and allowing the removal of a panel in the middle of a row without needing to remove the panels that precede it.

The longitudinal opening 260 is defined by a partial longitudinal cut of the core 226.

The first bracket 211 is a bracket that can be used at an intermediate region of the photovoltaic plant, and is adapted to lock two successive photovoltaic panels.

The device 210 is shown in the working configuration, i.e. fixing the photovoltaic panel to the longitudinal guide 1, and the first wings 222a, 222b, 222a', 222b' of the cam 214 are substantially parallel to the core 226.

However, in the inactive configuration, not shown in the figures, the first wings 222a, 222b, 222a', 222b' of the cam 214 are substantially at right angles to the core 226.

The second bracket 212 is constituted by a flat element 231, which is parallel to the core 226 of the first bracket 211 and associated with the tension member 213, and which has an axis of extension at right angles to the plane of arrangement of the flat element 231.

In particular, the extension of the flat element 231 is substantially comparable to the distance between the wings 2a, 2b of a longitudinal guide 1 and is such as to produce an interference with the locators 3a, 3b of the wings 2a, 2b, of that guide 1.

The tension member 213 is inserted with interference into the second bracket 212 and, with the latter, defines an anchoring element 240.

The tension member 213 comprises in the following order:
- a head 241, with an at least partially curved profile, at a first end thereof 115, interposed between the plates 221a, 221b of the cam 214, and coupled to it by means of the pin 230,
- a central portion 243, the width of which is comparable to the width of the head 241, inserted in the longitudinal opening 260,
- a widened portion 245, for the abutment of the second bracket 212, at a second end 244, which is opposite to the first end 215, the width of the widened portion 245 being wider than the width of the central portion 243.

Advantageously the anchoring element 240 passes through the core 226 of the first bracket 211, and the device 210 has the head 241 and the cam 214 above the core 226, with the pin 230 parallel to the plane of arrangement of the core 226.

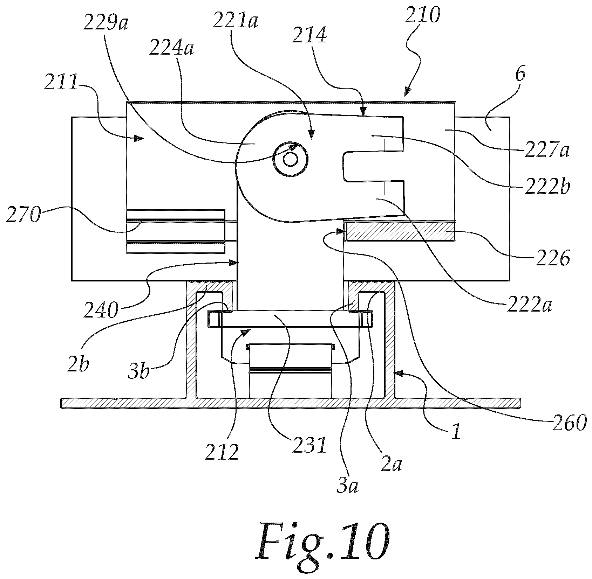

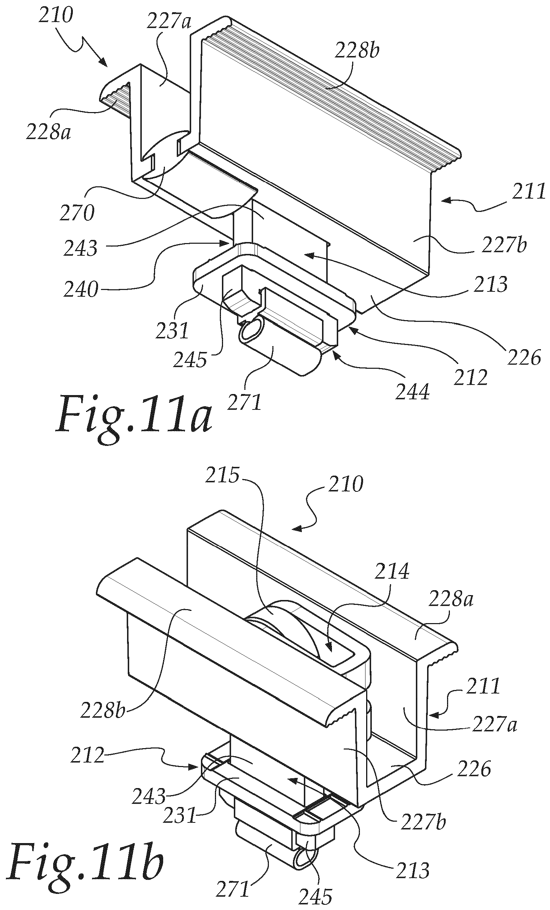

The device 210 comprises a first gasket 270 made of polymeric material, shaped complementarily to the longitudinal opening 260, adapted to be inserted in the longitudinal opening 260 in order to prevent the relative movement between the first bracket 211 and the anchoring element 240 after the first bracket 211 has been inserted on the tension member 213 as in Figures 10 and 11a.

The device 210 also comprises a second gasket 271, made of polymeric material, which is associated with the widened portion 245 on the face opposite to the face directed toward the head 241.

This second gasket 271 is adapted to keep the position of the fixing device 10 stable once it has been inserted in the guide 1.

The gasket 271, in fact, keeps the device 10 lifted and prevents it from sliding along the guide 1 owing, for example, to the slope of the roof.

The use of the device 210 according to the invention is the following.

The device 210 is positioned on the longitudinal guide 1 by placing the second bracket 112, 212 between the wings 2a, 2b, of the guide 1, below the locators 3a, 3b, and keeping the first bracket 211, 111 above these.

Then, the device 210 is brought close to corresponding perimeter profiles 6 of photovoltaic panels (not shown in the figures), placing the respective tabs 228a, 228b above such profiles 6 and the corresponding second wings 227a, 227b in contact with them.

At this point the technician inserts the tip of a tool (for example a screwdriver) into the opening 225 of the cam 214, and makes the latter turn about the pin 230, in order to bring it to the working configuration, shown in the figures.

The rotation of the cam 214 causes the lifting of the tension member 213, and a consequent tightening/fixing of the perimeter profiles 6 on the guide 1.

If it is necessary to remove the panel, it is sufficient to turn the cam 214 to the opposite position, with consequent lowering of the tension member 213, in order to release the clamping.

At this point it is possible to slide the first bracket 211 out from the tension member 213, by sliding it along the longitudinal opening 260 until it is removed.

In this manner it is possible to remove one panel from the row without needing to remove all the preceding panels along the row.

It should be noted that the device according to the invention is easier to use with respect to similar, conventional devices, as it does not require screw guns, but can be actuated easily and simply with a manual tool.

In practice it has been found that the invention fully achieves the intended aim and objects by providing a fixing device for photovoltaic panels that is easier and simpler than similar, conventional devices.

Furthermore, it should be noted that the device according to the invention enables a panel in the middle of a longitudinal row to be removed without the need for removing the panels that precede it.

According the invention, a fixing device for photovoltaic panels is devised, the application efficacy of which is independent of factors such as: operator skill, temperature, pre-loading of the spring.

Moreover, according to the invention a fixing device for photovoltaic panels is provided that does not present any difficulty in orienting the bracket with respect to the longitudinal guide, as the former is pre-oriented before use.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A fixing device (10, 110, 210) for photovoltaic panels, which comprises:
- a first bracket (11, 111, 211),
- a second bracket (12, 112, 212), arranged below said first bracket (11, 111, 211),
- a tension member (13, 113, 213) arranged between said first bracket (11, 111, 211) and said second bracket (12, 112, 212), for moving said second bracket (12, 112, 212) toward/away from said first bracket (11, 111, 211),
- a cam (14, 114, 214) which is kinematically connected to a first end (15, 115, 215) of said tension member (13, 113, 213), said cam (14, 114, 214) comprising a body provided with two parallel and mirror-symmetrical plates (21a, 21b, 121a, 121b, 221a, 221b), respectively: a first plate (21a, 121a, 221a) and a second plate (21b, 121b, 221b), each of said plates (21a, 21b, 121a, 121b, 221a, 221b) having a substantially C-shaped profile provided with a portion (24a, 24b, 124a, 124b, 224a, 224b) with an at least partially curved profile, two first wings (22a, 22b, 22a', 22b', 122a, 122b, 122a', 122b', 222a, 222b, 222a', 222b') extending from said portion (24a, 24b, 124a, 124b, 224a, 224b) with an at least partially curved profile, said plates (21a, 21b, 121a, 121b, 221a, 221b) being joined at the free ends of said first wings (22a, 22b, 22a', 22b', 122a, 122b, 122a', 122b', 222a, 222b, 222a', 222b') by two bridge elements (23a, 23b, 123a, 123b, 223a, 223b), each one of said bridge elements (23a, 23b, 123a, 123b, 223a, 223b) connecting two corresponding first wings (22a, 22a', 22b, 22b', 122a, 122a', 122b, 122b', 222a, 222a', 222b, 222b'), said bridge elements (23a, 23b, 123a, 123b, 223a, 223b) being arranged at right angles to the planes of arrangement of said plates (21a, 21b, 121a, 121b, 221a, 221b), each one of said plates (21a, 21b, 121a, 121b, 221a, 221b) having a through hole (29, 229a, 229b), proximate to/at said portion (24a, 24b, 124a, 124b, 224a, 224b) with an at least partially curved profile, said cam (14, 114, 214) having an opening (25, 125, 225) between said bridge elements (23a, 23b, 123a, 123b, 223a, 223b) which is opposite to said portion (24a, 24b, 124a, 124b, 224a, 224b) with an at least partially curved profile , said opening (25, 125, 225) being adapted for inserting a tip of a tool (7) for moving the cam (14, 114, 214).

2. The device (10, 110) according to claim 1, **characterized in that** said first bracket (11, 111) has a transverse cross-section with:
- a core (26, 126),
- at least one second wing (27a, 27b, 127), said at least one second wing extending from said core (26, 126) at right angles to and above the latter,
- a tab (28a, 28b, 128) for said at least one second wing (27a, 27b, 127), said tab (28a, 28b, 128) extending at the free end of said at least one second wing (27a, 27b, 127) and at right angles to it, said tab (28a, 28b, 128) extending parallel to said core (26, 126) and in the opposite direction to the latter with respect to said at least one second wing (27a, 27b, 127).

3. The device (10) according to claim 2, **characterized in that** said tension member (13) comprises:
- a first pin (16), which is at least partially threaded and passes through said first bracket (11), said first pin (16) being:
- connected to said cam (14), at a first end thereof, which coincides with said first end (15) of said tension member (13),
- screwed to said second bracket (12), at a second end thereof (17), which is opposite to the previous one,
- a coil spring (18) which surrounds said first pin (16), said coil spring (18) extending between said first bracket (11) and said second bracket (12).

4. The device (10) according to claim 3, **characterized in that** said first pin (16) has, at said first end (15) of said tension member (13), an enlarged head (19) provided with a through hole (20), the axis of extension of which is at right angles to the axis of extension of said first pin (16), said hole (29) of each one of said plates (21a, 21b) corresponding to said hole (20) of said enlarged head (19), said device (10) comprising a second pin (30), which passes through in the following order:
- said hole (29) of said first plate (21a),
- said hole (20) of said first pin (16),
- said hole of said second plate (21b).

5. The device (10) according to 5, **characterized in that** said first pin (16) passes through said core (26), said enlarged head (19) and said cam (14) being arranged above said core (26) with said second pin (30) parallel to the plane of arrangement of said core (26).

6. The device (10) according to claim 5, **characterized in that** said second bracket (12) is constituted by a flat element (31) which is parallel to said core (26) of said first bracket (11) and is screwed centrally to said first pin (16), said first pin (16) being at right angles to the plane of arrangement of said flat element (31).

7. The device according to claim 2, **characterized in that** said tension member (113) is in a single piece with said second bracket (112) and defines with the latter an anchoring element (140), said anchoring element (140) comprising in the following order:
- a hook-shaped head (141) at a first end (115) thereof, interposed between said plates (121a, 121b) of said cam (114) and coupled to it by means of a third pin (142),
- a central portion (143), the width of which is comparable to the width of said hook-shaped head (141),
- a widened portion (145), defined by said second bracket (112), at a second end (144), opposite to said first end (115), said widened portion (145) being wider than the width of said central portion (143).

8. The device (110) according to claim 7, **characterized in that** said anchoring element (140) passes through said core (126) of said first bracket (111), said hook-shaped head (141) and said cam (114) being arranged above said core (126), with said third pin (142) parallel to the plane of arrangement of said core (126).

9. The device (210) according to claim 1, **characterized in that** said first bracket (211) has a longitudinal opening (260).

10. The device (210) according to claim 9, **characterized in that** each one of said plates (221a, 221b) has a through hole (229a, 229b), proximate to/at said portion (224a, 224b) with an at least partially curved profile, said through hole (229a, 229b) of said plates (221a, 221b) corresponding to a through hole in said first end (215) of said tension member (213), said cam (214) having an opening (225) between said bridge elements (223a, 223b) which is opposite said portion (224a, 224b) with an at least partially curved profile.

11. The device (210) according to claim 10, **characterized in that** it comprises a pin (230) that passes through, in the following order:
- said hole (229a) of said first plate (221a),
- said hole of said first end (215) of said tension member (213),
- said hole (229b) of said second plate (221b).

12. The device (210) according to claim 11, **characterized in that** said first bracket (211) has a longitudinal profile which in transverse cross-section is substantially Ω-shaped, with:
- a core (226),
- two opposite and mirror-symmetrical second wings (227a, 227b), each one extending from said core (226) at right angles to and above the latter,
- a tab (228a, 228b) for each one of said second wings (227a, 227b), extending at the free end of the corresponding one of said second wings (227a, 227b), at right angles to it, said tab (228a, 228b) extending parallel to said core (226) and in the opposite direction to the latter with respect to the corresponding one of said second wings (227a, 227b).

13. The device (210) according to claim 12, **characterized in that** said core (226) of said first bracket (211) has said longitudinal opening (260), said longitudinal opening (260) extending starting from a longitudinal first end of said core (226) of said first bracket (211).

14. The device (210) according to claim 13, **characterized in that** said second bracket (212) is constituted by a flat element (231) parallel to said core (226) of said first bracket (211) and associated with said tension member (213), said tension member (213) having an axis of extension at right angles to the plane of arrangement of said flat element (231).

15. The device (210) according to claim 14, **characterized in that** said tension member (213) is inserted with interference into said second bracket (212) and defines therewith an anchoring element (240), said tension member (213) comprising in the following order:
- a head (241), with an at least partially curved profile, at a first end thereof (115), interposed between said plates (221a, 221b) of said cam (214), and coupled to it by means of said pin (230),
- a central portion (243), the width of which is comparable to the width of said head (241), inserted in said longitudinal opening (260),
- a widened portion (245), for the abutment of said second bracket (212), at a second end (244), opposite to said first end (215), said widened portion (245) being wider than the width of said central portion (243).

16. The device (210) according to claim 15, **characterized in that** said anchoring element (240) passes through said core (226) of said first bracket (211), said device (210) having said head (241) and said cam (214) above said core (226) with said pin (230) parallel to the plane of arrangement of said core (226).

17. The device (210) according to claim 16, **characterized in that** it comprises a first gasket (270) which is shaped complementarily to said longitudinal opening (260).

## Patentansprüche

1. Eine Befestigungsvorrichtung (10, 110, 210) für Photovoltaik-Paneele, die Folgendes umfasst:
- eine erste Halterung (11, 111, 211),
- eine zweite Halterung (12, 112, 212), angeordnet unter der ersten Halterung (11, 111, 211),
- ein Spannelement (13, 113, 213), angeordnet zwischen der ersten Halterung (11, 111, 211) und der zweiten Halterung (12, 112, 212), zum Bewegen der zweiten Halterung (12, 112, 212) zu der ersten Halterung (11, 111, 211) hin bzw. von ihr fort,
- einen Nocken (14, 114, 214), der kinematisch mit einem ersten Ende (15, 115, 215) des Spannelements (13, 113, 213) verbunden ist, wobei der Nocken (14, 114, 214) einen Körper umfasst, der mit zwei parallelen und spiegelsymmetrischen Platten (21a, 21b, 121a, 121b, 221a, 221b) ausgestattet ist, nämlich: einer ersten Platte (21a, 121a, 221a) und einer zweiten Platte (21b, 121b, 221b), wobei jede der Platten (21a, 21b, 121a, 121b, 221a, 221b) ein im Wesentlichen C-förmiges Profil hat, versehen mit einem Abschnitt (24a, 24b, 124a, 124b, 224a, 224b) mit einem zumindest teilweise gekrümmten Profil, zwei ersten Flügeln (22a, 22b, 22a', 22b', 122a, 122b, 122a', 122b', 222a, 222b, 222a', 222b'), die sich von dem Abschnitt (24a, 24b, 124a, 124b, 224a, 224b) mit einem zumindest teilweise gekrümmten Profil erstrecken; wobei die Platten (21a, 21b, 121a, 121b, 221a, 221b) an den freien Enden der ersten Flügel (22a, 22b, 22a', 22b', 122a, 122b, 122a', 122b', 222a, 222b, 222a', 222b') durch zwei Brückenelemente (23a, 23b, 123a, 123b, 223a, 223b) verbunden sind, wobei jedes der Brückenelemente (23a, 23b, 123a, 123b, 223a, 223b) zwei entsprechende erste Flügel (22a, 22a', 22b, 22b', 122a, 122a', 122b, 122b', 222a, 222a', 222b, 222b') verbindet, wobei die Brückenelemente (23a, 23b, 123a, 123b, 223a, 223b) in rechten Winkeln zu den Anordnungsebenen der Platten (21a, 21b, 121a, 121b, 221a, 221b) angeordnet sind, wobei jede der Platten (21a, 21b, 121a, 121b, 221a, 221b) ein Durchgangsloch (29, 229a, 229b) in der Nähe des/an dem Abschnitt(s) (24a, 24b, 124a, 124b, 224a, 224b) mit zumindest teilweise gekrümmtem Profil hat, wobei der Nocken (14, 114, 214) eine Öffnung (25, 125, 225) zwischen den Brückenelementen (23a, 23b, 123a, 123b, 223a, 223b) hat, die dem Abschnitt (24a, 24b, 124a, 124b, 224a, 224b) mit zumindest teilweise gekrümmtem Profil gegenüberliegt, wobei die Öffnung (25, 125, 225) zum Einführen einer Spitze eines Werkzeugs (7) zum Bewegen des Nockens (14, 114, 214) geeignet ist.

2. Die Vorrichtung (10, 110) gemäß Anspruch 1, **dadurch gekennzeichnet, dass** die erste Halterung (11, 111) einen transversalen Querschnitt mit Folgendem hat:
- einem Kern (26, 126),
- mindestens einem zweiten Flügel (27a, 27b, 127), wobei der mindestens eine zweite Flügel sich von dem Kern (26, 126) in rechten Winkeln zu und oberhalb Letzterem erstreckt,
- einer Nase (28a, 28b, 128) für den mindestens einen zweiten Flügel (27a, 27b, 127), wobei die Nase (28a, 28b, 128) sich am freien Ende des mindestens einen zweiten Flügels (27a, 27b, 127) und in rechten Winkeln dazu erstreckt, wobei die Nase (28a, 28b, 128) sich parallel zu dem Kern (26, 126) und in entgegengesetzte Richtung zu Letzterem mit Bezug auf den mindestens einen zweiten Flügel (27a, 27b, 127) erstreckt.

3. Die Vorrichtung (10) gemäß Anspruch 2, **dadurch gekennzeichnet, dass** das Spannelement (13) Folgendes umfasst:
- einen ersten Stift (16), der zumindest teilweise mit einem Gewinde versehen ist und durch die erste Halterung (11) verläuft, wobei der erste Stift (16) Folgendes ist:
- verbunden mit dem Nocken (14) an einem ersten Ende davon, das mit dem ersten Ende (15) des Spannelements (13) zusammenfällt,
- verschraubt mit der zweiten Halterung (12) an einem zweiten Ende davon (17), das dem zuvor erwähnten gegenüberliegt,
- eine Schraubenfeder (18), die den ersten Stift (16) umgibt, wobei sich die Schraubenfeder (18) zwischen der ersten Halterung (11) und der zweiten Halterung (12) erstreckt.

4. Die Vorrichtung (10) gemäß Anspruch 3, **dadurch gekennzeichnet, dass** der erste Stift (16) an dem ersten Ende (15) des Spannelements (13) einen vergrößerten Kopf (19) hat, versehen mit einem Durchgangsloch (20), dessen Erstreckungsachse in rechten Winkeln zur Erstreckungsachse des ersten Stifts (16) verläuft, wobei das Loch (29) jeder der Platten (21a, 21b) dem Loch (20) im vergrößerten Kopf (19) entspricht, wobei die Vorrichtung (10) einen zweiten Stift (30) umfasst, welcher in der angegebenen Reihenfolge verläuft durch:
- das Loch (29) in der ersten Platte (21a),
- das Loch (20) im ersten Stift (16),
- das Loch in der zweiten Platte (21b).

5. Die Vorrichtung (10) gemäß 5, **dadurch gekennzeichnet, dass** der erste Stift (16) durch den Kern (26), wobei der vergrößerte Kopf (19) und der Nocken (14) oberhalb des Kerns (26) angeordnet sind, wenn der zweite Stift (30) parallel zur Anordnungsebene des Kerns (26) ist.

6. Die Vorrichtung (10) gemäß Anspruch 5, **dadurch gekennzeichnet, dass** die zweite Halterung (12) aus einem flachen Element (31) besteht, das parallel zu dem Kern (26) der ersten Halterung (11) und zentral mit dem ersten Stift (16) verschraubt ist, wobei sich der erste Stift (16) in rechten Winkeln zur Anordnungsebene des flachen Elements (31) befindet.

7. Die Vorrichtung gemäß Anspruch 2, **dadurch gekennzeichnet, dass** das Spannelement (113) einstückig mit der zweiten Halterung (112) ist und mit Letzterer ein Verankerungselement (140) bestimmt, wobei das Verankerungselement (140) in der angegebenen Reihenfolge Folgendes umfasst:
- einen hakenförmigen Kopf (141) an einem ersten Ende (115) davon, angeordnet zwischen den Platten (121a, 121b) des Nockens (114) und damit gekoppelt über einen dritten Stift (142),
- einen zentralen Abschnitt (143), dessen Breite mit der Breite des hakenförmigen Kopfs (141) vergleichbar ist,
- einen verbreiterten Abschnitt (145), bestimmt von der zweiten Halterung (112), an einem zweiten Ende (144) gegenüber dem ersten Ende (115), wobei der verbreiterte Abschnitt (145) breiter ist als der zentrale Abschnitt (143).

8. Die Vorrichtung (110) gemäß Anspruch 7, **dadurch gekennzeichnet, dass** das Verankerungselement (140) durch den Kern (126) der ersten Halterung (111) verläuft, wobei der hakenförmige Kopf (141) und der Nocken (114) über dem Kern (126) angeordnet sind, wobei der dritte Stift (142) parallel zur Anordnungsebene des Kerns (126) ist.

9. Die Vorrichtung (210) gemäß Anspruch 1, **dadurch gekennzeichnet, dass** die erste Halterung (211) eine längliche Öffnung (260) hat.

10. Die Vorrichtung (210) gemäß Anspruch 9, **dadurch gekennzeichnet, dass** jede der Platten (221a, 221b) ein Durchgangsloch (229a, 229b) in der Nähe des/an dem Abschnitt(s) (224a, 224b) mit zumindest teilweise gekrümmtem Profil hat, wobei das Durchgangsloch (229a, 229b) der Platten (221a, 221b) einem Durchgangsloch in dem ersten Ende (215) des Spannelements (213) entspricht, wobei der Nocken (214) eine Öffnung (225) zwischen den Brückenelementen (223a, 223b) hat, die dem Abschnitt (224a, 224b) mit zumindest teilweise gekrümmtem Profil gegenüberliegt.

11. Die Vorrichtung (210) gemäß Anspruch 10, **dadurch gekennzeichnet, dass** sie einen Stift (230) umfasst, der in der angegebenen Reihenfolge verläuft durch:
- das Loch (229a) in der ersten Platte (221a),
- das Loch in dem ersten Ende (215) des Spannelements (213),
- das Loch (229b) in der zweiten Platte (221b).

12. Die Vorrichtung (210) gemäß Anspruch 11, **dadurch gekennzeichnet, dass** die erste Halterung (211) ein Längsprofil hat, das im transversalen Querschnitt im Wesentlichen Ω-förmig ist, mit
- einem Kern (226),
- zwei gegenüberliegenden spiegelsymmetrischen zweiten Flügeln (227a, 227b), die sich jeweils von dem Kern (226) in rechten Winkeln zu und über Letzterem erstrecken,
- einer Leiste (228a, 228b) für jeden der zweiten Flügel (227a, 227b), die sich am freien Ende des jeweiligen der zweiten Flügel (227a, 227b) in rechten Winkeln zu ihm erstreckt, wobei sich die Leiste (228a, 228b) parallel zu dem Kern (226) und in entgegengesetzter Richtung zu Letzterem mit Bezug auf den entsprechenden der zweiten Flügel (227a, 227b) erstreckt.

13. Die Vorrichtung (210) gemäß Anspruch 12, **dadurch gekennzeichnet, dass** der Kern (226) der ersten Halterung (211) eine längliche Öffnung (260) hat, wobei die längliche Öffnung (260) sich ausgehend von einem länglichen ersten Ende des Kerns (226) der ersten Halterung (211) erstreckt.

14. Die Vorrichtung (210) gemäß Anspruch 13, **dadurch gekennzeichnet, dass** die zweite Halterung (212) aus einem flachen Element (231) besteht, das parallel zu dem Kern (226) der ersten Halterung (211) und mit dem Spannelement (213) verbunden ist, wobei das Spannelement (213) eine Erstreckungsachse in rechten Winkeln zur Anordnungsebene des flachen Elements (231) hat.

15. Die Vorrichtung (210) gemäß Anspruch 14, **dadurch gekennzeichnet, dass** das Spannelement (213) mit Interferenz in die zweite Halterung (212) eingeführt ist und damit ein Verankerungselement (240) bestimmt, wobei das Spannelement (213) in der angegebenen Reihenfolge Folgendes umfasst:
- einen Kopf (241) mit zumindest teilweise gekrümmtem Profil an einem ersten Ende davon (115), angeordnet zwischen den Platten (221a, 221b) des Nockens (214) und damit mit Hilfe des Stifts (230) gekoppelt,
- einen zentralen Abschnitt (243), dessen Breite vergleichbar ist mit der Breite des Kopfs (241), eingeführt in die längliche Öffnung (260),
- einen verbreiterten Abschnitt (245) zum Anliegen der zweiten Halterung (212), wobei der verbreiterte Abschnitt (245) an einem zweiten Ende (244) gegenüber dem ersten Ende (215) breiter ist als der zentrale Abschnitt (243).

16. Die Vorrichtung (210) gemäß Anspruch 15, **dadurch gekennzeichnet, dass** das Verankerungselement (240) durch den Kern (226) der ersten Halterung (211) verläuft, wobei der Kopf (241) und der Nocken (214) der Vorrichtung (210) über dem Kern (226) liegen, wobei der Stift (230) parallel zur Anordnungsebene des Kerns (226) ist.

17. Die Vorrichtung (210) gemäß Anspruch 16, **dadurch gekennzeichnet, dass** sie eine erste Dichtung (270) umfasst, die komplementär zu der länglichen Öffnung (260) geformt ist.

## Revendications

1. Dispositif de fixation (10, 110, 210) pour panneaux photovoltaïques, qui comprend :
- un premier support (11, 111, 211),
- un deuxième support (12, 112, 212), disposé en dessous dudit premier support (11, 111, 211),
- un élément de tension (13, 113, 213) disposé entre ledit premier support (11, 111, 211) et ledit deuxième support (12, 112, 212), destiné à déplacer ledit deuxième support (12, 112, 212) vers/loin de ledit premier support (11, 111, 211),
- une came (14, 114, 214) qui est reliée cinématiquement à une première extrémité (15, 115, 215) dudit élément de tension (13, 113, 213), ladite came (14, 114, 214) comprenant un corps muni de deux plaques parallèles et symétriques par rapport à un plan de symétrie (21a, 21b, 121a, 121b, 221a, 221b), respectivement : une première plaque (21a, 121a, 221a) et une deuxième plaque (21b, 121b, 221b), chacune desdites plaques (21a, 21b, 121a, 121b, 221a, 221b) présentant un profil sensiblement en forme de C muni d'une partie (24a, 24b, 124a, 124b, 224a, 224b) présentant un profil au moins partiellement courbé, deux premières ailes (22a, 22b, 22a', 22b', 122a, 122b, 122a', 122b', 222a, 222b, 222a', 222b') s'étendant à partir de ladite partie (24a, 24b, 124a, 124b, 224a, 224b) présentant un profil au moins partiellement courbé, lesdites plaques (21a, 21b, 121a, 121b, 221a, 221b) étant reliées aux extrémités libres desdites premières ailes (22a, 22b, 22a', 22b', 122a, 122b, 122a', 122b', 222a, 222b, 222a', 222b') par deux éléments de pontage (23a, 23b, 123a, 123b, 223a, 223b), chacun desdits éléments de pontage (23a, 23b, 123a, 123b, 223a, 223b) reliant deux premières ailes correspondantes (22a, 22a', 22b, 22b', 122a, 122a', 122b, 122b', 222a, 222a', 222b, 222b'), lesdits éléments de pontage (23a, 23b, 123a, 123b, 223a, 223b) étant disposés perpendiculairement aux plans de disposition desdites plaques (21a, 21b, 121a, 121b, 221a, 221b), chacune desdites plaques (21a, 21b, 121a, 121b, 221a, 221b) comportant un trou traversant (29, 229a, 229b), à proximité de/au niveau de ladite partie (24a, 24b, 124a, 124b, 224a, 224b) présentant un profil au moins partiellement courbé, ladite came (14, 114, 214) comportant une ouverture (25, 125, 225) entre lesdits éléments de pontage (23a, 23b, 123a, 123b, 223a, 223b) qui est située à l'opposé de ladite partie (24a, 24b, 124a, 124b, 224a, 224b) présentant un profil au moins partiellement courbé, ladite ouverture (25, 125, 225) étant adaptée pour l'insertion d'une pointe d'un outil (7) destiné à déplacer la came (14, 114, 214).

2. Dispositif (10, 110) selon la revendication 1, **caractérisé en ce que** ledit premier support (11, 111) présente une section transversale avec:
- un noyau (26, 126),
- au moins une deuxième aile (27a, 27b, 127), ladite au moins une deuxième aile s'étendant à partir dudit noyau (26, 126) perpendiculairement à celui-ci et au-dessus de celui-ci,
- une languette (28a, 28b, 128) pour ladite au moins une deuxième aile (27a, 27b, 127), ladite languette (28a, 28b, 128) s'étendant à l'extrémité libre de ladite au moins une deuxième aile (27a, 27b, 127) et perpendiculairement à celle-ci, ladite languette (28a, 28b, 128) s'étendant parallèlement audit noyau (26, 126) et dans la direction opposée à celui-ci par rapport à ladite au moins une deuxième aile (27a, 27b, 127).

3. Dispositif (10) selon la revendication 2, **caractérisé en ce que** ledit élément de tension (13) comprend:
- une première goupille (16), qui est au moins partiellement filetée et traverse ledit premier support (11), ladite première goupille (16) étant:
- reliée à ladite came (14), à une première extrémité de celle-ci, qui coïncide avec ladite première extrémité (15) dudit élément de tension (13),
- vissée audit deuxième support (12), au niveau d'une deuxième extrémité (17) de celle-ci, opposée à la précédente,
- un ressort hélicoïdal (18) qui entoure ladite première goupille (16), ledit ressort hélicoïdal (18) s'étendant entre ledit premier support (11) et ledit deuxième support (12).

4. Dispositif (10) selon la revendication 3, **caractérisé en ce que** ladite première goupille (16) comporte, au niveau de ladite première extrémité (15) dudit élément de tension (13), une tête élargie (19) pourvue d'un trou traversant (20), dont l'axe d'extension est perpendiculaire à l'axe d'extension de ladite première goupille (16), ledit trou (29) de chacune desdites plaques (21a, 21b) correspondant audit trou (20) de ladite tête élargie (19), ledit dispositif (10) comprenant une deuxième goupille (30), qui traverse dans l'ordre suivant:
- ledit trou (29) de ladite première plaque (21a),
- ledit trou (20) de ladite première goupille (16),
- ledit trou de ladite deuxième plaque (21b).

5. Dispositif (10) selon la revendication 5, **caractérisé en ce que** ladite première goupille (16) traverse ledit noyau (26), ladite tête élargie (19) et ladite came (14) étant disposées au-dessus dudit noyau (26), ladite deuxième goupille (30) étant parallèle au plan de disposition dudit noyau (26).

6. Dispositif (10) selon la revendication 5, **caractérisé en ce que** ledit deuxième support (12) est constitué d'un élément plat (31) qui est parallèle audit noyau (26) dudit premier support (11) et qui est vissé au centre de ladite première goupille (16), ladite première goupille (16) étant perpendiculaire au plan de disposition dudit élément plat (31).

7. Dispositif selon la revendication 2, **caractérisé en ce que** ledit élément de tension (113) est d'un seul tenant avec ledit deuxième support (112) et définit avec ce dernier un élément d'ancrage (140), ledit élément d'ancrage (140) comprenant, dans l'ordre suivant:
- une tête en forme de crochet (141) à une première extrémité (115) de celui-ci, interposée entre lesdites plaques (121a, 121b) de ladite came (114) et couplée à celle-ci au moyen d'une troisième goupille (142),
- une partie centrale (143), dont la largeur est comparable à celle de ladite tête en forme de crochet (141),
- une partie élargie (145), définie par ledit deuxième support (112), à une deuxième extrémité (144), opposée à ladite première extrémité (115), ladite partie élargie (145) étant plus large que la largeur de ladite partie centrale (143).

8. Dispositif (110) selon la revendication 7, **caractérisé en ce que** ledit élément d'ancrage (140) traverse ledit noyau (126) dudit premier support (111), ladite tête en forme de crochet (141) et ladite came (114) étant disposées au-dessus dudit noyau (126), ladite troisième goupille (142) étant parallèle au plan de disposition dudit noyau (126).

9. Dispositif (210) selon la revendication 1, **caractérisé en ce que** ledit premier support (211) présente une ouverture longitudinale (260).

10. Dispositif (210) selon la revendication 9, **caractérisé en ce que** chacune desdites plaques (221a, 221b) comporte un trou traversant (229a, 229b), à proximité de/au niveau de ladite partie (224a, 224b) présentant un profil au moins partiellement courbé, ledit trou traversant (229a, 229b) desdites plaques (221a, 221b) correspondant à un trou traversant dans ladite première extrémité (215) dudit élément de tension (213), ladite came (214) comportant une ouverture (225) entre lesdits éléments de pontage (223a, 223b) qui est opposée à ladite partie (224a, 224b) présentant un profil au moins partiellement courbé.

11. Dispositif (210) selon la revendication 10, **caractérisé en ce qu'**il comprend une goupille (230) qui traverse, dans l'ordre suivant :
- ledit trou (229a) de ladite première plaque (221a),
- ledit trou de ladite première extrémité (215) dudit élément de tension (213),
- ledit trou (229b) de ladite deuxième plaque (221b).

12. Dispositif (210) selon la revendication 11, **caractérisé en ce que** ledit premier support (211) présente un profil longitudinal qui, en section transversale, est sensiblement en forme de Ω, avec :
- un noyau (226),
- deux secondes ailes opposées et symétriques par rapport à un plan de symétrie (227a, 227b), chacune s'étendant à partir dudit noyau (226) perpendiculairement à celui-ci et au-dessus de celui-ci,
- une languette (228a, 228b) pour chacune desdites secondes ailes (227a, 227b), s'étendant à l'extrémité libre de l'aile correspondante parmi lesdites secondes ailes (227a, 227b), perpendiculairement à celle-ci, ladite languette (228a, 228b) s'étendant parallèlement audit noyau (226) et dans la direction opposée à celui-ci par rapport à la deuxième aile correspondante (227a, 227b).

13. Dispositif (210) selon la revendication 12, **caractérisé en ce que** ledit noyau (226) dudit premier support (211) comporte ladite ouverture longitudinale (260), ladite ouverture longitudinale (260) s'étendant à partir d'une première extrémité longitudinale dudit noyau (226) dudit premier support (211).

14. Dispositif (210) selon la revendication 13, **caractérisé en ce que** ledit deuxième support (212) est constitué d'un élément plat (231) parallèle audit noyau (226) dudit premier support (211) et associé audit élément de tension (213), ledit élément de tension (213) ayant un axe d'extension perpendiculaire au plan de disposition dudit élément plat (231).

15. Dispositif (210) selon la revendication 14, **caractérisé en ce que** ledit élément de tension (213) est inséré avec serrage dans ledit deuxième support (212) et définit avec celui-ci un élément d'ancrage (240), ledit élément de tension (213) comprenant, dans l'ordre suivant :
- une tête (241), présentant un profil au moins partiellement courbé, à une première extrémité (115) de celui-ci, intercalée entre lesdites plaques (221a, 221b) de ladite came (214), et couplée à celle-ci au moyen de ladite goupille (230),
- une partie centrale (243), dont la largeur est comparable à celle de ladite tête (241), insérée dans ladite ouverture longitudinale (260),
- une partie élargie (245), destinée à la butée dudit deuxième support (212), à une deuxième extrémité (244), opposée à ladite première extrémité (215), ladite partie élargie (245) étant plus large que la largeur de ladite partie centrale (243).

16. Dispositif (210) selon la revendication 15, **caractérisé en ce que** ledit élément d'ancrage (240) traverse ledit noyau (226) dudit premier support (211), ledit dispositif (210) comportant ladite tête (241) et ladite came (214) au-dessus dudit noyau (226), ladite goupille (230) étant parallèle au plan de disposition dudit noyau (226).

17. Dispositif (210) selon la revendication 16, **caractérisé en ce qu'**il comprend un premier joint d'étanchéité (270) dont la forme est complémentaire de celle de ladite ouverture longitudinale (260).
